(19) Europäisches Patentamt
European Patent Office
Office européen des brevets

(11) **EP 4 239 512 A1**

(12) **EUROPEAN PATENT APPLICATION**

(43) Date of publication:
**06.09.2023 Bulletin 2023/36**

(21) Application number: **23160044.6**

(22) Date of filing: **03.03.2023**

(51) International Patent Classification (IPC):
**G06F 30/12** (2020.01)    **G06F 30/13** (2020.01)
**G06F 30/17** (2020.01)    **G06F 111/04** (2020.01)

(52) Cooperative Patent Classification (CPC):
**G06F 30/12; G06F 30/13; G06F 30/17;**
G06F 2111/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.03.2022 US 202217687535**

(71) Applicant: **Autodesk, Inc.**
**San Francisco, CA 94105 (US)**

(72) Inventors:
• **WANG, Yi**
**San Francisco, 94105 (US)**
• **NOURBAKHSH, Mehdi**
**San Francisco, 94105 (US)**
• **ZHAO, Dale**
**San Francisco, 94105 (US)**

(74) Representative: **Morrall, Jonathan Ian McLachlan
et al**
**Kilburn & Strode LLP**
**Lacon London**
**84 Theobalds Road**
**London WC1X 8NL (GB)**

(54) **COMPUTER-AIDED TECHNIQUES FOR AUTOMATICALLY GENERATING DESIGNS THAT REFLECT DESIGN INTENTS**

(57)    In various embodiments, an intent-driven layout application automatically generates design for floor spaces (390). The intent-driven layout application generates a logic formula (250) based on a statement of a design intent (220) and at least one fuzzy geometric predicate (230). The intent-driven layout application computes, for a first spatial object, a set of desirability values (380) for a set of candidate placements (342) within a first design based on the logic formula. Based on the set of desirability values (380), the intent-driven layout application selects a first candidate placement from the set of candidate placements (342). Subsequently, the intent-driven layout application generates a second design based on the first design, where the first spatial object has the first candidate placement within the second design.

FIGURE 3

**Description**

**BACKGROUND**

**Field of the Various Embodiments**

The various embodiments relate generally to computer science and computer-aided design software and, more specifically, to computer-aided techniques for automatically generating designs that reflect design intents

**Description of the Related Art**

During a typical conceptual design phase for a building floorplan, an architect works with a client to define the overall design problem, design constraints, and high-level design intents for the floor space. Subsequently, during a layout cycle, the architect usually lays out representations of different spatial objects multiple times within the floorplan in order to generate a variety of different designs for the floor space. For example, an architect could position and orient or "place" different icons representing different rooms or spatial objects within the floorplan, which includes representations of external walls of the building, to generate different two-dimensional (2D) designs of the floor space. As part of this layout cycle, the architect attempts to reflect the design intents for the floor space, while ensuring that the design constraints are satisfied, periodically discarding sub-optimal designs. After generating a sufficient number of designs and culling the sub-optimal designs, the architect usually reviews the remaining or "best" designs with the client.

During the design review, the client normally selects one or more of the designs for further work and may change the design problem, one or more of the design constraints, and/or one or more of the design intents. For example, the client could express an initial design intent to have a dining hall near a row of windows. After reviewing the initial set of designs generated by the architect, the client could decide that the row of windows should be reserved for offices. Based on the design review with the client, the architect typically executes the layout cycle again and conducts another design review with the client. This process normally repeats until the client selects one design as the "final" design.

In general, as the number of spatial objects to be placed within a given floorplan, the number of design intents, and the number of constraints increase, the amount of time required to generate and evaluate different designs for the associated floor space increases. Consequently, the time required to generate relatively complex designs that satisfy a particular client can be prohibitive. However, if the architect purposefully reduces the number of different design options for the client, then the architect necessarily explores only of limited portion of the overall design space, which can result in a final selection of a sub-optimal design and client dissatisfaction.

In an effort to reduce the time required to generate and evaluate 2D designs of floor spaces without overly limiting the exploration of the overall design space, computer-aided design (CAD) applications sometimes implement trained neural networks to automatically generate designs for given design problems. These types of trained neural networks typically include a large number of parameters (hundreds, thousands, or even tens of thousands) that are automatically adjusted during a training phase in order to "learn" how to make design decisions based on numerous different training designs. One drawback of using trained neural networks to generate designs is that the design decisions made by trained neural networks typically cannot be influenced by users (e.g., architects). Instead, the designs generated by trained neural networks usually reflect the design intents that are inherent or implicit in the different training designs. The amount of time required to manually rework a given design generated by a neural network in order to account for even a small number of design intents can be substantial. Accordingly, with the limited amount of time normally allocated for the conceptual design phase of a floor space, sub-optimal final designs can still result from the design process.

As the foregoing illustrates, what is needed in the art are more effective techniques for accounting for design intents when generating two-dimensional designs for floor spaces using CAD applications.

**SUMMARY**

One embodiment of the present invention sets forth a computer-implemented method for automatically generating designs for floor spaces. The method includes generating a first logic formula based on a first statement of a first design intent and at least one fuzzy geometric predicate; computing, for a first spatial object, a first set of desirability values for a first set of candidate placements within a first design based on the first logic formula; selecting a first candidate placement from the first set of candidate placements based on the first set of desirability values; and generating a second design based on the first design, where the first spatial object has the first candidate placement within the second design.

At least one technical advantage of the disclosed techniques relative to the prior art is that, with the disclosed techniques, designs for floor spaces can be automatically generated based on design intents. In that regard, with the disclosed techniques, statements of design intents are automatically converted to logic formulas, and desirability values for different placements within a given design for spatial objects are computed based the logic formulas. The resulting desirability values can then be compared to determine the best placement within the design for a given spatial object. Accordingly, the amount of time and effort required to generate designs that are convergent with design intents can be substantially reduced relative to prior art approaches. Further, with the disclosed techniques the overall design space can be explored more thoroughly relative to what can be achieved with conventional CAD applications, which can result in more optimized final designs relative to conventional approaches. These technical advantages provide one or more technological improvements over the prior art.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 is a conceptual illustration of a system configured to implement one or more aspects of the various embodiments;

Figure 2 is a more detailed illustration of the fuzzy intent engine of Figure 1, according to various embodiments;

Figure 3 is a more detailed illustration of the design generator of Figure 1, according to various embodiments; and

Figures 4A-4B set forth a flow diagram of method steps for automatically generating two-dimensional designs for floor spaces, according to various embodiments.

## DETAILED DESCRIPTION

In the following description, numerous specific details are set forth to provide a more thorough understanding of the various embodiments. However, it will be apparent to one skilled in the art that the inventive concepts may be practiced without one or more of these specific details. For explanatory purposes, multiple instances of like objects are denoted with reference numbers identifying the object and parenthetical alphanumeric character(s) identifying the instance where needed.

### System Overview

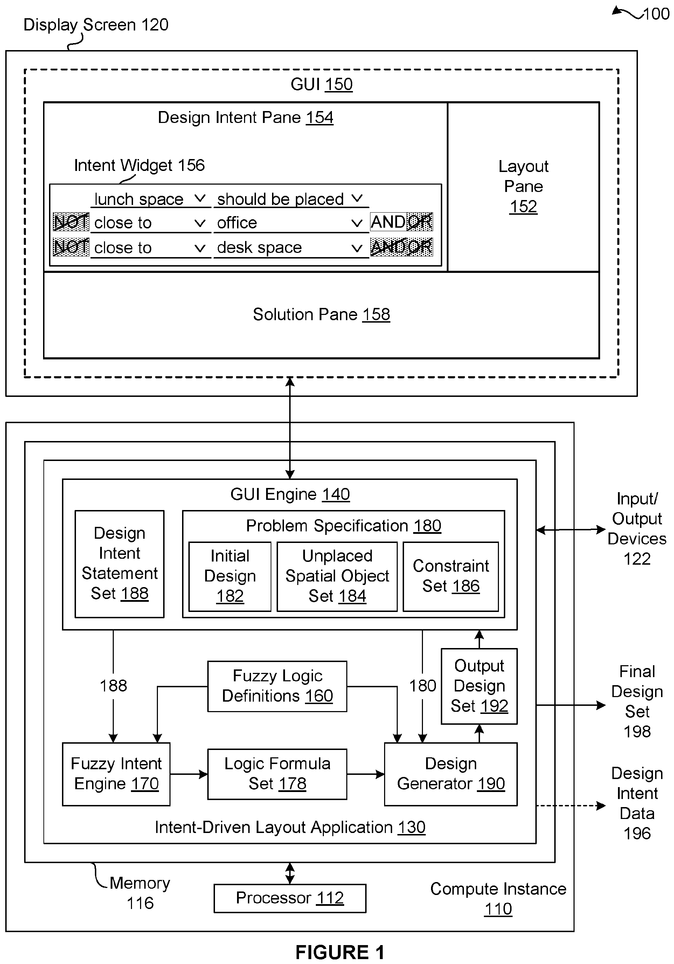

Figure 1 is a conceptual illustration of a system 100 configured to implement one or more aspects of the various embodiments. As shown, in some embodiments, the system 100 includes, without limitation, a compute instance 110, a display screen 120, and input/output devices 122. In some other embodiments, the system 100 can further include, without limitation, one or more other compute instances and/or one or more other display screens. In the same or other embodiments, any number of touchscreens can supplement or replace the display screen 120.

Any number of the components of the system 100 can be distributed across multiple geographic locations or implemented in one or more cloud computing environments (e.g., encapsulated shared resources, software, and data) in any combination. In some embodiments, the compute instance 110 and/or zero or more other compute instances can be implemented in a cloud computing environment, implemented as part of any other distributed computing environment, or implemented in a stand-alone fashion.

As shown, in some embodiments, the compute instance 110 includes, without limitation, a processor 112 and a memory 116. The processor 112 can be any instruction execution system, apparatus, or device capable of executing instructions. For example, the processor 112 could be a central processing unit, a graphics processing unit, a controller, a micro-controller, a state machine, or any combination thereof. The memory 116 of the compute instance 110 stores content, such as software applications and data, for use by the processor 112 of the compute instance 110. In some embodiments, each of any number of other compute instances can include any number of other processors and any number of other memories in any combination. In particular, the compute instance 110 and/or one or more other compute instances can provide a multiprocessing environment in any technically feasible fashion.

The memory 116 can be one or more of a readily available memory, such as random-access memory, read only memory, floppy disk, hard disk, or any other form of digital storage, local or remote. In some embodiments, a storage (not shown) can supplement or replace the memory 116. The storage can include any number and type of external memories that are each accessible to the processor 112. For example, and without limitation, the storage can include a Secure Digital Card, an external Flash memory, a portable compact disc read-only memory, an optical storage device, a magnetic storage device, or any suitable combination of the foregoing.

As shown, in some embodiments, the compute instance 110 is connected to the input/output devices 122. The input/output devices 122 can include, without limitation, one or more devices configured to receive input, one or more devices configured to provide output, one or more devices configured to both receive input and provide output, or any combination thereof. Some examples of devices that can be configured to receive input include, without limitation, a keyboard, a mouse, and a microphone. Some examples of devices that can be configured to provide output include, without limitation, a display device and a speaker. Some examples of devices that can be configured to both receive input and provide output include, without limitation, a touchscreen and a universal serial bus port. In some embodiments, the input/output devices 122 include, without limitation, a display device that can be configured to display any amount and/or types of visual content on the display screen 120 in any technically feasible fashion.

In some embodiments, the compute instance 110 can be integrated with any number and/or types of other devices (e.g., one or more other compute instances and/or the input/output devices 122) into a user device. Some examples of user devices include, without limitation, desktop computers, laptops, smartphones, smart televisions, game consoles, and tablets.

In general, the compute instance 110 is configured to implement one or more software applications. For explanatory purposes only, each software application is described as residing in the memory 116 of the compute instance 110 and executing on the processor 112 of the compute instance 110. In some embodiments, any number of instances of any number of software applications can reside in the memory 116 and any number of other memories associated with any number of other compute instances and execute on the processor 112 of the compute instance 110 and any number of other processors associated with any number of other compute instances in any combination. In the same or other embodiments, the functionality of any number of software applications can be distributed across any number of other software applications that reside in the memory 116 and any number of other memories associated with any number of other compute instances and execute on the processor 112 and any number of other processors associated with any number of other compute instances in any combination. Further, subsets of the functionality of multiple software applications can be consolidated into a single software application.

In particular, the compute instance 110 is configured to generate 2D designs for floor spaces. As described previously herein, as the number of spatial objects to be placed within a given floor space, the number of design intents, and the number of constraints increase, the amount of time required for an architect to generate and evaluate different designs for the floor space increases. Consequently, the time required to generate relatively complex designs that satisfy a particular client can be prohibitive. However, if the architect purposefully reduces the number of different design options for the client, then the architect necessarily explores only of limited portion of the overall design space, which can result in sub-optimal final designs. In an effort to reduce the time required to generate and evaluate 2D designs of floor spaces without overly limiting the exploration of the overall design space, CAD applications sometimes implement trained neural networks to automatically generate designs for given design problems. One drawback of using trained neural networks to generate designs is that the design decisions made by trained neural networks typically cannot be influenced by users (e.g., architects). The amount of time required to manually rework a given design generated by a neural network in order to satisfy a particular client can be substantial. Accordingly, with the limited amount of time normally allocated to generate 2D designs for floor spaces (e.q., during a conceptual design phase for a building floorplan), sub-optimal final designs can still result from the design process.

## Automatically Generating Designs that Reflect Design Intents

To address the above problems, in some embodiments, the compute instance 110 includes, without limitation, an intent-driven layout application 130. As described in greater detail below, in some embodiments, the intent-driven layout application 130 automatically generates designs for floor spaces that solve user-specified design problems while accounting for user-specified statements of design intents. A statement of design intent is also referred to herein as a "design intent statement." As described in greater detail below, in some embodiments, a design intent statement can be any type of natural language statement about any number and/or types of spatial characteristics of and/or any number and/or types of spatial relations between any number and/or types of spatial objects, any 2D space, or any combination thereof. As shown in Figure 1, in some embodiments, a design intent statement can be any type of pre-structured natural language statement that is customized by a user through a GUI 150.

In some embodiments, design intent statements can include, without limitation, one or more of the following:

- "Lunch space should be placed close to office and close to desk space"
- "Copy room should be placed away from window."
- "Office should be placed close to window."
- "Staircase should be placed at the center."
- "Meeting room should be placed close to office or close to desk space."

- "All offices should be placed with the same entrance orientation."

In some embodiments, as part of a design session, the intent-driven layout application 130 executes, without limitation, one or more layout cycles, where the design problem and/or the design intent statements vary between layout cycles. In the same or other embodiments, during each layout cycle, the intent-driven layout application 130 generates, re-generates, or modifies an output design set 192 based on a problem specification 180 and a design intent statement set 188. Accordingly, over time, the problem specification 180, the design intent statement set 188, the output design set 192, or any combination thereof can vary.

For explanatory purposes, variations in the problem specification 180, the design intent statement set 188, and the output design set 192 are also referred to herein as versions of the problem specification 180, the design intent statement set 188, and the output design set 192, respectively. Each version of the output design set 192 is associated with a version of the problem specification 180 and a version of the design intent statement set 188, where none, some, or all of the versions can match.

The problem specification 180 can include, without limitation, any amount and/or types of data that describe any number and/or types of aspects of a design problem. As shown, in some embodiments, the problem specification 180 includes, without limitation, an initial design 182, an unplaced spatial object set 184, and a constraint set 186. The initial design 182 specifies, without limitation, a bounded 2D space and zero or more placed or "locked" spatial objects within the 2D space in any technically feasible fashion. In some embodiments, the initial design 182 is a building floorplan that specifies, without limitation, external walls that define a floor space, zero or more windows, zero or more doors, zero or more stairways, zero or more elevators, and any number of similar spatial objects. The intent-driven layout application 130 can initially determine or generate and subsequently modify and/or replace or re-generate the initial design 182 in any technically feasible fashion.

The unplaced spatial object set 184 specifies, without limitation, one or more spatial objects that are to be arranged within the bounded 2D space defined by the initial design. Each spatial object is associated with a geometric definition that describes, without limitation, a 2D area occupied by the spatial object and any amount (including none) and/or types of additional data in any technically feasible fashion. For instance, in some embodiments, each spatial object can be labeled with any amount and/or types of additional data and the number and/or types of labels can vary between spatial objects.

In some embodiments, each spatial object is associated with a representation, such as an icon, for display purposes and optionally to enable associated user interactions, such as modification, deletion, and manipulation, via any number and/or types of graphical user interfaces (GUIs). In the same or other embodiments, each spatial object is associated with a type of spatial object or "spatial object type." Some examples of spatial object types are "office," "lunch space," "desk space," "elevator," "staircase," "dining room," "bedroom," "bathroom," "wall," "window," and "door," to name a few. In some embodiments, each spatial object that represents an enclosed room specifies the location and orientation of one or more associated entrances. The intent-driven layout application 130 can initially determine and subsequently modify the unplaced spatial object set 184 in any technically feasible fashion.

The constraint set 186 specifies, without limitation, any number and/or types of constraints. In some embodiments, the constraint set 186 includes, without limitation, any number and/or types of user-specified constraints and/or any number and/or types of general constraints. Some examples of user-specified constraints are a minimum hallway size, a minimum distance of a wall from a door, and an alignment requirement (e.q., a requirement that spatial objects are to be aligned to a configurable structural grid). Some examples of general constraints are a requirement that spatial objects cannot overlap, containment conditions, required clearances, and circulation requirements associated with movements of building occupants. The intent-driven layout application 130 can initially determine and subsequently modify the constraint set 186 in any technically feasible fashion.

The design intent statement set 188 includes, without limitation, zero or more design intent statements. As described previously herein, in some embodiments, each design intent statement can be any type of statement about any number and/or types of spatial characteristics of and/or any number and/or types of spatial relations between any number and/or types of spatial objects, any 2D space defined via the initial design 182, or any combination thereof. The intent-driven layout application 130 can initialize, generate, re-generate, modify, and re-initialize the design intent statement set 188 in any technically feasible fashion based, at least in part, on any amount and/or types of user-specified data and/or any number and/or types of user events. In some embodiments, each user event corresponds to a different interaction between a user and an interactive GUI element. The intent-driven layout application 130 can generate, re-generate, modify, and delete each of any number of design intent statements in any technically feasible fashion based, at least in part, on any amount and/or types of user-specified data and/or any number and/or types of user events.

The output design set 192 includes, without limitation, one or more output designs (not shown in Figure 1) for floor spaces. As referred to herein, an "output design" is a design that is automatically generated by the intent-driven layout application 130. In some embodiments, each output design solves an associated version of the problem specification 180 while accounting for the design intent statements in an associated version of the design intent statement set 188.

As shown, in some embodiments, the intent-driven layout application 130 resides in the memory 116 of the compute instance 110 and executes on the processor 112 of the compute instance 110. In the same or other embodiments, the intent-driven layout application 130 includes, without limitation, a GUI engine 140, fuzzy logic definitions 160, a fuzzy intent engine 170, and a design generator 190. In some embodiments, during each design session, the GUI engine 140 enables a user to interactively specify, optionally re-specify, and optionally modify the problem specification 180 and the design intent statement set 188, view and optionally modify each version of the output design set 192, and select a final design set 198 via the GUI 150. The GUI 150 can be any type of GUI that is displayed on any number and/or types of display screens in any technically feasible fashion. As shown, in some embodiments, the GUI 150 is displayed on the display screen 120.

In some embodiments, the GUI engine 140 initiates each of any number of design sessions. In the same or other embodiments, to initiate each design session, the GUI engine 140 performs any number and/or types of operations to display any number and/or types of GUI elements within the GUI 150. Any number of the GUI elements can be interactive GUI elements. Interactive GUI elements are also referred to herein as "widgets." Each widget enables one or more types of user interactions that automatically trigger corresponding user events. Some examples of types of widgets include, without limitation, scroll bars, buttons, text entry boxes, drop-down lists, and sliders.

The GUI engine 140 can perform any number (including none) and/or types of operations in response to any number and/or types of user events received via the GUI 150, optionally any number and/or types of other events (e.g., time-outs), and optionally any number and/or types of triggers. For instance, in some embodiments, the GUI engine 140 can display, re-display, or cease to display each of any number of GUI elements within the GUI 150 in response to user events received via the GUI 150.

In some embodiments, the GUI engine 140 can automatically initiate a new layout cycle to re-generate the output design set 192 as a direct or indirect response to one or more user events received via the GUI 150. For instance, in some embodiments, the GUI engine 140 engine initiates a new layout cycle in response to a "generate layout" user event that is triggered whenever a "generate layout" button displayed within the GUI 150 is clicked. In the same or other embodiments, the GUI engine 140 enables and disables an auto re-optimization mode in response to user events that are triggered when an "auto re-optimization" button displayed within the GUI 150 is selected and deselected, respectively. When the auto re-optimization mode is enabled, after modifying the problem specification 180, the initial design 182, the unplaced spatial object set 184, the constraint set 186, the design intent statement set 188, or any combination thereof in response to one or more user events, the GUI engine 140 automatically initiates a new layout cycle.

As shown, in some embodiments, the GUI engine 140 organizes GUI elements into a layout pane 152, a design intent pane 154, and a solution pane 158. Each of the layout pane 152, the design intent pane 154, and the solution pane 158 is a container GUI element that can include, without limitation, any number and/or types of other GUI elements arranged across any number of hierarchical levels. In some embodiments, the GUI engine 140 displays the layout pane 152, the design intent pane 154, and the solution pane 158 within the GUI 150 throughout each design session. In some other embodiments, the GUI engine 140 can display different subsets of the layout pane 152, the design intent pane 154, and the solution pane 158 within the GUI 150 at different points-in-time. In yet other embodiments, the GUI engine 140 can display, optionally update and re-display, and optionally cease to display each of any number and/or types of GUI elements that are organized in any technically feasible fashion throughout each design session.

The layout pane 152 includes, without limitation, any number and/or types of GUI elements that enable the GUI engine 140 to represent and perform any number and/or types of operations on any number and/or types of designs, spatial objects, and constraints based, at least in part, on user events received via the GUI 150. Some examples of designs include, without limitation, the initial design 182, any number of modified versions of the initial design 182, output designs included in any number of versions of the output design set 192, and any number of modified versions of output designs.

In some embodiments, the layout pane 152 allows a user to repeatedly specify, select, view, and modify the initial design 182, unplaced spatial object set 184, and the constraint set 186. In the same or other embodiments, the layout pane 152 allows a user to view, modify, and select the initial design 182, output designs, and any number and/or types of others designs. In the same or other embodiments, the GUI engine 140 can add to and delete from the final design set 198, zero or more of the output designs, zero or more modified versions of output designs, and zero or more other designs based on any number and/or types of user events associated with the layout pane 152 and received via the GUI 150.

In some embodiments, the layout pane 152 allows a user to repeatedly specify, lock, and unlock placements within any number and/or types of designs of any number of spatial objects and repeatedly lock and unlock any portions of any number and/or types of designs. In some embodiments, the GUI engine 140 automatically adjusts the unplaced spatial object set 184 in response to user events received via the GUI 150.

In some embodiments, when an auto re-optimization mode is enabled, the GUI engine 140 defines an internal problem specification based on user events received via the GUI 150 and then triggers a new layout cycle based on the internal problem specification. For instance, in some embodiments, the GUI engine 140 defines an internal problem specification and triggers a new layout cycle in order to locally re-optimize a portion of an output design that is impacted when a user changes and optionally locks the placement of a representation of a meeting room via the layout pane 152.

The design intent pane 154 includes, without limitation, any number of GUI elements that enable the GUI engine 140 to generate and subsequently modify the design intent statement set 188 based, at least in part, on user events received via the GUI 150. In some embodiments, the GUI engine 140 initializes the design intent statement set 188 to an empty set and can subsequently add design intent statements to, delete design intent statements from, and modify design intent statements in the design intent statement set 188 based on user events associated with the design intent pane 154. In the same or other embodiments, the GUI engine 140 generates each design intent statement based on user events received via the GUI 150 in any technically feasible fashion.

In some embodiments, the GUI engine 140 generates each design intent statement in response to receiving one or more user events that correspond to interactions between a user and the intent widget 156. As shown, in some embodiments, any number of interactions between the user and the intent widget 156 define any number of user selections that customize one or more design intent patterns displayed via an intent widget 156 included in the design intent pane 154. In the same or other embodiments, each design intent pattern can include, without limitation, any number and/or types of selection widgets corresponding to any number and/or types of high-level spatial relations connecting one or more spatial object types, any number of spatial object types, any number and/or types of spatial objects, any number and/or types of logical conjunctions, any number and/or types of logical disjunctions, any number and/or types of negations, any number and/or type of other logical operators, or any combination thereof. Any number of spatial relations can be vague or "fuzzy." In some embodiments, two examples of fuzzy spatial relations are a placement preference of "should be placed" and a spatial concept of "close to."

For explanatory purposes, Figure 1 depicts the intent widget 156 at a point-in-time in an exemplary design session associated with some embodiments at which a user has entered a new design intent statement of "lunch space should be placed close to office and close to desk space." In some embodiments, Figure 1 therefore depicts exemplary user selections entered via the intent widget 156. As shown, the exemplary user selections entered via the intent widget 156 include, without limitation, "lunch space" for a first spatial object type, "should be placed" corresponding to a placement preference, "close to" corresponding to a first spatial concept, "office" for a second spatial object type, "and" for an optional logical operator, "close to" corresponding to a second placement preference, and "desk space" for a third spatial object type. As also shown, two boxes annotated with "not," two boxes annotated with "or," and one box annotated with "and" are grayed-out and stuck-through to indicate that the two corresponding negations, the two corresponding disjunctions, and the corresponding conjunction are not selected.

In some embodiments, the solution pane 158 includes, without limitation, any number of GUI elements that enable the GUI engine 140 to display, at the end of each layout cycle, selectable representations of each output design in the newly generated version of the output design set 192. In the same or other embodiments, any number and/or types of user events and/or triggers can cause the GUI engine 140 to update and re-display the solution pane 158. In some embodiments, after the intent-driven layout application 130 re-generates the output design set 192, the GUI engine 140 re-generates the solution pane 158 based on the new version of the output design set 192 and then re-displays the solution pane 158. In the same or other embodiments, the GUI engine 140 can add to and delete from the final design set 198, any number of output designs based on user events associated with the solution pane 158 and received via the GUI 150.

As described previously herein, in some embodiments, the GUI engine 140 can trigger any number of layout cycles. In the same or other embodiments, the intent-driven layout application 130 can determine to initiate any number of layout cycles in any technically feasible fashion. During each layout cycle, the intent-driven layout application 130 generates a new version of the output design set 192 that includes, without limitation, any number of output designs for a floor space.

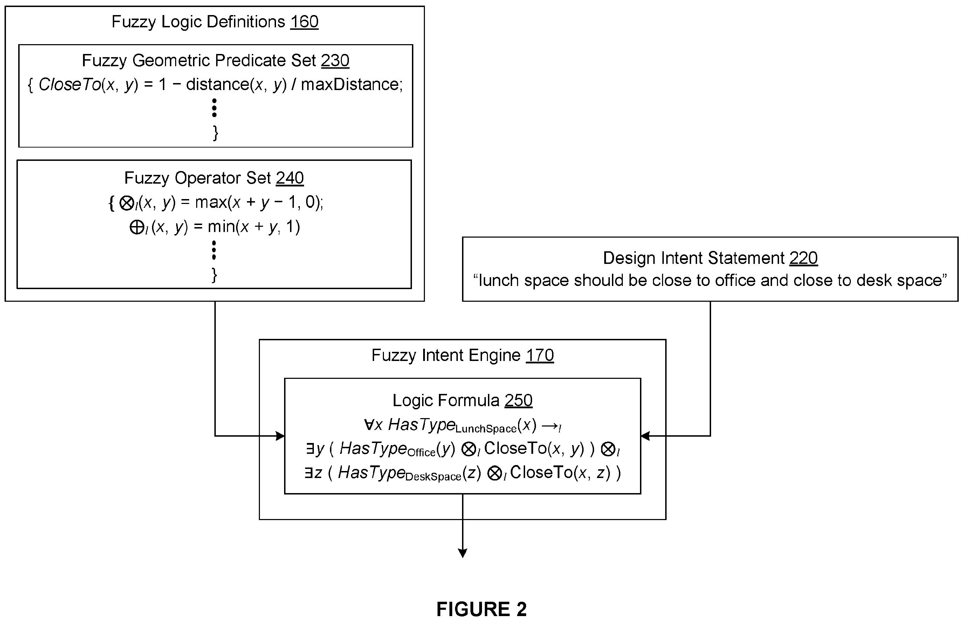

In some embodiments, during an initial layout cycle of a design session, the intent-driven layout application 130 initializes a logic formula set 178 to an empty set. The intent-driven layout application 130 then causes the fuzzy intent engine 170 to convert each design intent statement in the design intent statement set 188 to a logic formula (not shown in Figure 1) based on the fuzzy logic definitions 160. In some embodiments, the fuzzy logic definitions 160 can include, without limitation, any amount and/or type of data that can be used to define and evaluate any number and/or types of spatial characteristics of and/or spatial relations between any number and/or types of spatial objects based on degrees of truth. The fuzzy logic definitions 160 in some embodiments are described in greater detail below in conjunction with Figure 2. As the fuzzy intent engine 170 converts each design intent statement to a logic formula, the intent-driven layout application 130 adds the logic formula to the logic formula set 178.

The fuzzy intent engine 170 can convert a design intent statement to any type of logic formula in any technically feasible fashion. In some embodiments, the fuzzy intent engine 170 can implement any number of propositional algorithms, predicate algorithms, first-order logic algorithms, formalization algorithms, any other types of logic algorithms, or any combination thereof to represent a design intent statement as any type of logic formula. As described in greater detail below in conjunction with Figure 2, in the same or other embodiments, the fuzzy intent engine 170 constructs a first-order logic formula corresponding to a design intent statement from one or more fuzzy geometric predicates that are defined in the fuzzy logic definitions 160.

In some embodiments, a fuzzy geometric predicate is a function that maps a set of placements and optionally any number and/or types of properties of spatial objects to a truth value that correlates to an associated degree of satisfaction. In some embodiments, a truth value can be any real number within a "unit interval" that ranges from 0, inclusive, through 1, inclusive, and is denoted herein as [0, 1]. In the same or other embodiments, a truth value of 0 indicates a minimum degree of satisfaction, a truth value of 1 indicates a maximum degree of satisfaction, and other truth values indicate intermediate degrees of satisfaction.

During each non-initial layout cycle, the intent-driven layout application 130 ensures that the logic formula set 178 is up-to-date. More precisely, in some embodiments, the intent-driven layout application 130 ensures that the logic formula set 178 reflects any changes to the design intent statement set 188 since the previous layout cycle. In some embodiments, if the intent-driven layout application 130 determines that the GUI engine 140 has not changed the design intent statement set 188 since the previous layout cycle, then the intent-driven layout application 130 does not update the logic formula set 178. Otherwise, the intent-driven layout application 130 updates the logic formula set 178 to reflect the changes to the design intent statement set 188. The intent-driven layout application 130 can update the logic formula set 178 in any technically feasible fashion.

In some embodiments, to update the logic formula set 178, the intent-driven layout application 130 identifies and removes each out-of-date logic formula from the logic formula set 178. An out-of-date logic formula is a logic formula ostensibly representing a design intent statement that has been modified or deleted from the design intent statement set 188 since the previous layout cycle. The intent-driven layout application 130 then causes the fuzzy intent engine 170 to convert each design intent statement that has been modified or added since the previous layout cycle to a logic formula based on the fuzzy logic definitions 160. In some embodiments, as the fuzzy intent engine 170 converts or re-converts a design intent statement to a logic formula, the intent-driven layout application 130 adds the logic formula to the logic formula set 178.

In some embodiments, after generating the logic formula set 178 during an initial layout cycle or ensuring that the logic formula set 178 is up-to-date during a non-initial layout cycle, the intent-driven layout application 130 causes the design generator 190 to generate or re-generate, respectively the output design set 192. In the same or other embodiments, to generate or re-generate the output design set 192, the intent-driven layout application 130 initializes or re-initializes, respectively, the output design set 192 to the empty set. The intent-driven layout application 130 then causes the design generator 190 to generate one or more output designs based on the logic formula set 178, the fuzzy logic definitions 160, and the problem specification 180. In some embodiments, each output design corresponds to a different placement sequence (not shown in Figure 1) for the unplaced spatial object set 184. As the design generator 190 generates each output design, the intent-driven layout application 130 adds the output design to the output design set 192.

In some embodiments, the design generator 190 incrementally generates an output design based on the logic formula set 178, the fuzzy logic definitions 160, and the problem specification 180. In the same or other embodiments, the intent-driven layout application 130 sequentially, concurrently, or any combination thereof causes one or more instances of the design generator 190 to sequentially, concurrently, or any combination thereof generate multiple output designs based on the logic formula set 178, the fuzzy logic definitions 160, and the problem specification 180. For instance, in some embodiments, the intent-driven layout application 130 causes each of N instances of the design generator 190 to concurrently generate a different output design, where N can be any integer greater than or equal to one. The design generator 190 can generate an output design based on the logic formula set 178, the fuzzy logic definitions 160, and the problem specification 180 in any technically feasible fashion.

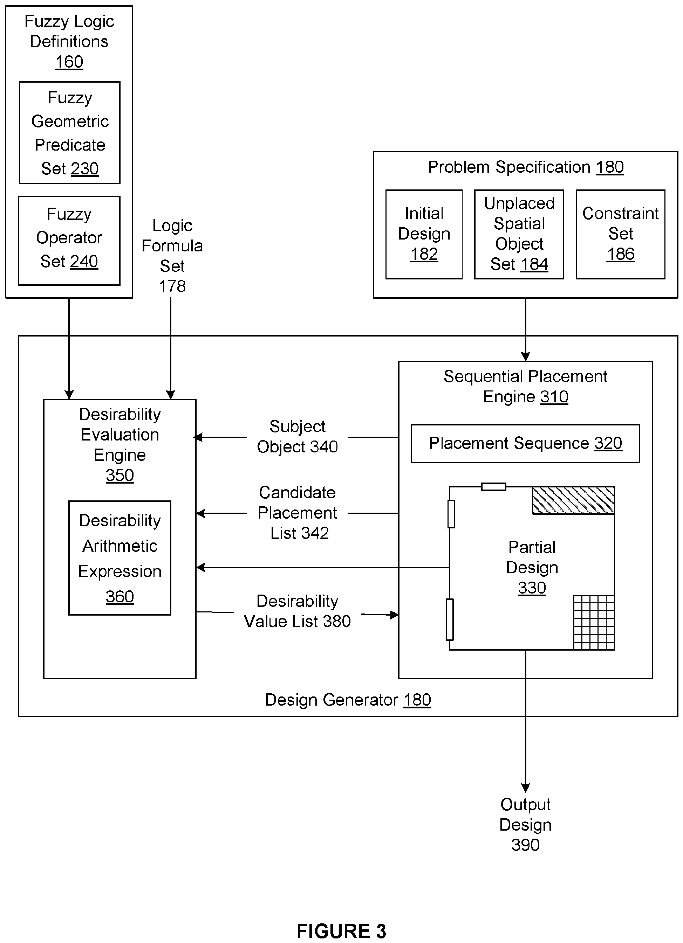

As described in greater detail below in conjunction with Figure 3, in some embodiments, the design generator 190 executes a random number generator or a pseudo random number generator to determine a placement sequence for the unplaced spatial object set 184. The design generator 190 sets a partial design (not shown in Figure 1) equal to the initial design 182 and sets a subject object equal to the first spatial object in the placement sequence. The design generator 190 determines, for the subject object, any number of candidate placements within the partial design, where each candidate placement satisfies the constraint set 186. The design generator 190 can specify each candidate placement in any technically feasible fashion. In some embodiments, each candidate placement specifies a different combination of a position and an orientation within the partial design.

In some embodiments, the design generator 190 computes a different overall truth value or "desirability value" for each candidate placement based on the subject object, the candidate placement, the partial design, the logic formula set 178, and the fuzzy logic definitions 160. The design generator 190 can compute the desirability values in any technically feasible fashion. In some embodiments, the design generator 190 generates an arithmetic equation (not shown in Figure 1) having fuzzy semantics based on one or more of the logic formulas included in the logic formula set 178, the fuzzy logic definitions 160, and the partial design. In the same or other embodiments, the arithmetic equation quantifies the desirability of a placement for the subject object, and the design generator 190 evaluates the arithmetic expression for each candidate placement to determine the corresponding desirability value.

In some embodiments, the design generator 190 selects the candidate placement having the greatest desirability value. Subsequently, the design generator 190 specifies, in the partial design, that the subject spatial object is placed in accordance with the selected candidate placement. In this fashion, the design generator 190 generates a new version of the partial design, where the subject object has the selected candidate placement within the new version of the partial design. After the design generator 190 has specified, in the partial design, a placement for the last spatial object in the placement sequence, the design generator 190 outputs the partial design as an output design.

Although not shown, in some embodiments, if the design generator 190 is unable to determine, for the subject object, any candidate placement within the partial design that satisfies the constraint set 196, then the design generator 190 does not modify the partial design to specify a placement for the spatial object. Instead, the design generator 190 can execute any number and/or types of operations that identify the subject object as an unplaceable spatial object with respect to the partial design in any technically feasible fashion.

For instance, in some embodiments, if the area of a subject object exceeds the area of each free space in the partial design, then the design generator 196 is unable to determine, for the subject object, any candidate placement within the partial design that satisfies the constraint set 196. In the same or other embodiments, if the design generator 196 is unable to determine, for the subject object, any candidate placement that satisfies the constraint set 196, then the design generator 196 adds the subject object to a list of unplaceable spatial objects that is associated with the partial design in any technically feasible fashion. For instance, in some embodiments, the list of unplaceable spatial objects is included in metadata that is associated with the partial design.

As persons skilled in the art will recognize, in some embodiments, the design generator 190 "locally" optimizes each of the output designs for the associated placement sequence. And because the intent-driven layout application causes the design generator 190 to randomly or pseudo-randomly generates different placement sequences for each of multiple output designs during each layout cycle, each version of the output design set 192 can represent 2D designs of floor spaces that are locally optimized across different portions of the design space of acceptable designs.

As shown, in some embodiments, the intent-driven layout application 130 can store in any accessible memory and/or transmit to any number and/or types of software applications, any number and/or types of designs included in the final design set 198. In some embodiments, the final design set 198 can include, without limitation, any number of final designs that are selected by a user in any technically feasible fashion. In some embodiments, each final design can be an output design, a modified version of an output design, or any other design that is selected for any number and/or types of subsequent design activities.

Advantageously, because the design generator 190 compares desirability values for different candidate placements to determine a single placement for each object in the unplaced spatial object set 184 when generating each output design, the output designs automatically reflect the design intent statements. As a result, relative to using trained neural networks that make design decisions that typically cannot be influenced by users to automatically generate designs, the amount of rework required to generate designs that are convergent with design intents can be substantially reduced. Further, the intent-driven layout application 130 can enable an overall design space to be explored more thoroughly relative to what can be achieved with conventional CAD applications, which can result in more optimized final designs relative to conventional approaches.

As shown, in some embodiments, the intent-driven layout application 130 can store in any accessible memory and/or transmit to any number and/or types of software applications, any amount and/or types of design intent data 196. In the same or other embodiments, the design intent data 196 can include, without limitation, any number of design intent statements, any number of logic formulas, any amount and/or types of other data that are associated with any number of design intents, or any combination thereof.

Although not shown, in some embodiments, the intent-driven layout application 130 can import any amount and/or types of design intent data 196 from one or more previous design sessions. For instance, in some embodiment, the intent-driven layout application can import any portions of design intent data 196 associated with any number of previous design sessions to initialize the design intent statement set 188. Advantageously, re-using the design intent data 196 can decrease the amount of time and effort required to properly capture design intents during the conceptual design phases for each of any number of different design problems. Furthermore, re-using the design intent data 196 to automatically solve multiple design problems can increase the likelihood that the output designs generated by the design generator 190 to solve the different design problems exhibit similar, preferred design characteristics.

Note that the techniques described herein are illustrative rather than restrictive and can be altered without departing from the broader spirit and scope of the invention. Many modifications and variations on the functionality of the intent-driven layout application 130, the GUI engine 140, the fuzzy intent engine 170, and the design generator 190 as described herein will be apparent to those of ordinary skill in the art without departing from the scope and spirit of the described embodiments. Similarly, many modifications and variations on the content of the fuzzy logic definitions 160, design intent statement set 188, the problem specification 180, the initial design 182, the unplaced spatial object set 184, the constraint set 186, the logic formula set 178, the output design set 192, the final design set 198, and the design intent data 196 as described herein will be apparent to those of ordinary skill in the art without departing from the scope and spirit of the described embodiments.

It will be appreciated that the system 100 shown herein is illustrative and that variations and modifications are possible. For example, the functionality provided by the intent-driven layout application 130, the GUI engine 140, the fuzzy intent engine 170, and the design generator 190 as described herein can be integrated into or distributed across any number of software applications (including one), and any number of components of the system 100. Further, the connection topology between the various units in Figure 1 can be modified as desired. Although not shown, in some embodiments, any number of instances of the intent-driven layout application 130 can automatically generate any number of designs for any number of floor spaces during any number of design sessions, via any number of GUIs displayed on any number of display screens in any technically feasible fashion.

### Representing Design Intents as Fuzzy Logic Formulas

Figure 2 is a more detailed illustration of the fuzzy intent engine 170 of Figure 1, according to various embodiments. As shown, in some embodiments, the fuzzy intent engine 170 converts a design intent statement 220 to a logic formula 250 based on the fuzzy logic definitions 160. Referring back to Figure 1, in some embodiments, the design intent statement 220 is one of multiple design intent statements included in the design intent statement set 188. In the same or other embodiments, after the fuzzy intent engine 170 generates the logic formula 250, the intent-driven layout application 130 adds the logic formula 250 to the logic formula set 178.

The fuzzy intent engine 170 can convert the design intent statement 220 to the logic formula 250 in any technically feasible fashion that is consistent with the fuzzy logic definitions 160. As shown, in some embodiments, the fuzzy logic definitions 160 include, without limitation, a fuzzy geometric predicate set 230 and a fuzzy operator set 240. In some embodiments, the fuzzy geometric predicate set 230 includes, without limitation, one or more fuzzy geometric predicates. Each fuzzy geometric predicate in the fuzzy geometric predicate set 230 is a function that maps a set of placements of spatial objects to a truth value that correlates to an associated degree of satisfaction. As described previously herein, in some embodiments, a truth value can be any real number within the unit interval. In the same or other embodiments, in the context of a fuzzy geometric predicate, a truth value of 0 indicates a minimum degree of satisfaction, a truth value of 1 indicates a maximum degree of satisfaction, and other truth values indicate intermediate degrees of satisfaction.

As shown, in some embodiments, the fuzzy geometric predicate set 230 specifies, without limitation, a geometric predicate Close To and any number of other geometric predicates (depicted via ellipses). In some embodiments, other geometric predicates included in the fuzzy geometric predicate set 230 include, without limitation, geometric predicates *IsFarFrom, IsAtTheCenter, IsOnSouth, IsOnNorth, IsOnEast, IsOnWest,* and *HaveSameEntranceOrientationWith.*

As depicted, in some embodiments the geometric predicate *CloseTo* is the function"*CloseTo*($x$, $y$) = 1 - distance($x$, $y$) / maxDistance." In the context of the geometric predicate *CloseTo*, $x$ and $y$ are spatial objects, distance($x$, $y$) is the Euclidean distance between reference points within the bounding boxes of $x$ and $y$, respectively, and maxDistance is the largest possible distance between two points in a bounded 2D space. Some examples of a reference point within a bounding box include, without limitation, the center of the bounding box, the centroid of an area corresponding to the bounding box, or one of any number of associated entrances.. In some embodiments, the bounded 2D space is defined via the initial design 182.

The fuzzy operator set 240 specifies, without limitation, any number and/or types of operators that can be used to evaluate degrees of truth. In some embodiments, the fuzzy operator set 240 specifies, without limitation, the following operators:

| | |
|---|---|
| Łukasiewicz t-norm | $\otimes_l(x, y) = \max(x + y - 1, 0)$ |
| Łukasiewicz t-conorm | $\otimes_l(x, y) = \min(x + y, 1)$ |
| Gödel t-norm | $\otimes_m(x, y) = \min(x, y)$ |
| Gödel t-conorm | $\otimes_m(x, y) = \max(x, y)$ |
| product t-norm | $\otimes_p(x, y) = x \cdot y$ |
| product t-conorm | $\otimes_p(x, y) = x + y - x \cdot y$ |
| standard negator | $\neg_s(x, y) = 1 - x$ |
| R-implicator induced by $\otimes_m$ | $\rightarrow_r = \begin{cases} 1 \text{ if } x \leq y \\ y \text{ otherwise} \end{cases}$ |

(continued)

S-implicator induced by $\otimes_m$    $\to_s$ = max(1 - x, y)
R-implicator induced by $\otimes_l$    $\to_l$ = $max(1 - x + y, 1)$

As shown, in some embodiments, the fuzzy intent engine 170 converts the design intent statement 220 to logic formula 250 that is a fuzzy-first order logic formula based on a fuzzy geometric predicate set 230 and a fuzzy operator set 240. In the same or other embodiments, the fuzzy intent engine 170 can implement any number of propositional algorithms, predicate algorithms, first-order logic algorithms, formalization algorithms, any other types of logic algorithms, or any combination thereof to represent the design intent statement 220 as any type of logic formula 250.

In some embodiments, to convert the design intent statement 220 to the logic formula 250, the fuzzy intent engine 170 expresses the design intent statement 220 as a pair denoted *intent = <e, F>*, where *intent* denotes the design intent statement 220, e denotes a spatial object type of a subject of the design intent statement 220, and *F* denotes the logic formula 250 for the subject object. In the same or other embodiments, the logic formula 250 is a fuzzy first-order logic formula that the fuzzy intent engine 170 constructs from atomic propositions that include, without limitation, one or more of the geometric predicates specified in the fuzzy geometric predicate set 230 and zero or more spatial object type related propositions.

For explanatory purposes, Figure 2 denotes an example of the design intent statement 220 and an example of the logic formula 250 that are an input to and a corresponding output of, respectively, the fuzzy intent engine 170 in some embodiments. As shown, in some embodiments, the fuzzy intent engine 170 converts the design intent statement 220 of
*"lunch space should be close to office and desk space"*
to the logic formula 250 of :

$\forall x \, HasType_{LunchSpace}(x) \to_l$
$\exists y \, ( \, HasType_{Office}(y) \otimes_l CloseTo(x,y)) \otimes_l$
$\exists z \, ( \, HasType_{DeskSpace}(z) \, )$

As persons skilled in the art will recognize, the design intent statement 220 can be evaluated for a placement of a spatial object that is referred to as a "subject object" and any portion of any layout (e.g., a set of placements of other spatial values) to compute a truth value that correlates to a degree of satisfaction for the placement of the subject spatial object. The design intent statement 220 can be evaluated in any technically feasible fashion. For instance, in some embodiments, the design intent statement 220 can be evaluated based on value definitions specified in the fuzzy geometric predicate set 230, value definitions specified in the fuzzy operator set 240, and other types of value definitions, any number and/or types of rules of inference and/or rules of substitution, or any combination thereof.

Figure 3 is a more detailed illustration of the design generator 190 of Figure 1, according to various embodiments. As shown, in some embodiments, the design generator 190 generates an output design 390 based on the problem specification 180, the logic formula set 178, and the fuzzy logic definitions 160. Referring back to Figure 1, in some embodiments, after the design generator 190 generates the output design 390, the intent-driven layout application 130 adds the output design 390 to the output design set 192.

As described previously herein in conjunction with Figure 1, in some embodiments, the problem specification 180 includes, without limitation, the initial design 182, the unplaced spatial object set 184, and the constraint set 186. In the same or other embodiments, the logic formula set 178 represents the design intent statement set 188. As described previously herein in conjunction with Figure 2, in some embodiments, the logic formula set 178 includes, without limitation, any number and/or types of logic formulas that can each be evaluated to determine a satisfaction value for a corresponding design intent based on a placement for a subject object having a corresponding spatial object type and the fuzzy logic definitions 160. In the same or other embodiments, the fuzzy logic definitions 160 include, without limitation, the fuzzy geometric predicate set 230 and the fuzzy operator set 240.

The design generator 190 can generate the output design 390 that solves the problem specified via the problem specification 180 in any technically feasible fashion that accounts for the logic formula set 178. In some embodiments, including embodiments depicted in Figure 3, the design generator 190 sequentially (e.g., one-at-a-time) determines a placement for each spatial object in unplaced spatial object set 184 to incrementally generate the output design 390. In the same or other embodiments, the design generator 190 includes, without limitation, a sequential placement engine 310 and a desirability evaluation engine 350.

As shown, in some embodiments, the sequential placement engine 310 includes, without limitation, a placement sequence 320 and a partial design 330. The placement sequence 320 specifies a sequential ordering of the spatial objects included in the unplaced spatial object set 184. The sequential placement engine 310 can determine the placement sequence 320 for the unplaced spatial object set 184 in any technically feasible fashion. In some embodiments, the sequential placement engine 310 executes a random number generator or a pseudo random number generator to determine the placement sequence 320 for the unplaced spatial object set 184.

In some embodiments, the design generator 190 sets the partial design 330 equal to the initial design 182 and executes N placement iterations, where N is the total number of spatial objects included in the unplaced spatial object set 184. During the 1st-Nth placement iterations, the design generator 190 determines and specifies, in the partial design 330, a placement for the spatial object that is 1st-Nth, respectively, in the placement sequence 320. After the Nth placement iteration, the partial design 330 specifies a different placement for each of the spatial objects in the unplaced spatial object set 184. Accordingly, after the Nth placement iteration, the design generator 190 outputs the partial design 330 as the output design 390.

In some embodiments, to execute the xth placement iteration, where x is an integer between 1 and N, the design generator 190 sets a subject object 340 equal to the spatial object from the unplaced spatial object set 184 that is xth in the placement sequence 320. The design generator 190 then determines a candidate placement list 342 for the subject object 340 based on the partial design 330 and the constraint set 186. The candidate placement list 342 includes, without limitation, any number of different candidate or possible placements within the partial design 330 for the subject object 340.

The design generator 190 can specify each candidate placement in any technically feasible fashion. For instance, in some embodiments, each candidate placement specifies a position of a center of a bounding box associated with the subject object 340 with respect to the partial design 330 and an orientation of the subject object 340 with respect to the partial design 330. In some other embodiments, each candidate placement specifies a position of a center of a bounding box associated with the subject object 340 with respect to the partial design 330 and an orientation of the subject object 340 with respect to a default orientation associated with the subject object 340 or the associated object type. In some embodiments, the candidate placement is at least a portion of a transform that is associated with the subject object 340. In the same or other embodiments, each transform specifies, without limitation, a position, a rotation, and a scaling factor.

For explanatory purposes, specifying a placement for the subject object 340 in the partial design 330 as per a candidate placement is referred to herein as "applying the candidate placement to the partial design 330." Importantly, the design generator 190 selects each candidate placement such that after applying the candidate placement to the partial design 330, the resulting version of the partial design 330 satisfies each constraint specified in the constraint set 186.

In some embodiments, the design generator 190 can select each candidate placement such that, after applying the candidate placement, the resulting version of the partial design 330 complies with the constraints specified in the constraint set 186 and any number and/or types of other constraints and/or rules. For instance, in some embodiments, the design generator 190 selects each candidate placement such that, after applying the candidate placement, the resulting version of the partial design 330 complies with any number and/or types of architecture-specific rules, the subject object 340 does not overlap with any other spatial object already placed within the partial design 330, and the subject object 340 is aligned with a spatial object already placed within the partial design 330 and/or a configurable structural grid (not shown). In the same or other embodiments, when generating the candidate placement list 342, the design generator 190 can account for any number and/or types of design preferences in any technically feasible fashion.

In some embodiments, after generating the candidate placement list 342 for the subject object 340, the design generator 190 transmits the candidate placement list 342, the subject object 340, and the partial design 330 to the desirability evaluation engine 350. As described in greater detail below, in response, the desirability evaluation engine 350 returns a desirability value list 380. The desirability value list 380 specifies, without limitation, a different desirability value for each of the candidate placements specified in the candidate placement list 342. In some embodiments, the desirability value for a candidate placement correlates to an overall or aggregate degree of satisfaction for the subset of the design intent statement set 188 that is associated with the subject object 340. In some embodiments, the desirability value for a candidate placement therefore indicates a degree of desirability associated with placing the subject object 340 within the partial design 330 as per the candidate placement.

In some embodiments, the design generator 190 performs any number and/or types of optimization operations based on the desirability value list 380 to select one of the candidate placements from the candidate placement list 342 as an optimized placement for the subject object 340. For instance, in some embodiments, the design generator 190 performs one or more comparison operations on the desirability values specified in the desirability value list 380 to determine the greatest desirability value. The design generator 190 then selects the candidate placement associated with the greatest desirability values from the candidate placement list 342 as the optimized placement for the subject object 340. The design generator 190 specifies, in the partial design 330, the optimized placement for the subject object 340 to end the xth placement iteration.

After the Nth placement iteration, the design generator 190 outputs the partial design 330 as the output design 390. As described previously herein, in some embodiments, the intent-driven layout application 130 adds the output design to the output design set 192. Notably, each output design in the output design set 192 is associated with a different placement sequence for the unplaced spatial object set 184.

As shown, in some embodiments, the desirability evaluation engine 350 generates the desirability value list 380 based on the candidate placement list 342, the subject object 340, the partial design 330, the logic formula set 178, and the fuzzy logic definitions 160. For each of the candidate placements included in the candidate placement list 342, the desirability evaluation engine 350 can evaluate of any number of the fuzzy logic definitions 160 based on the candidate placement, the spatial object type of the subject object 340, and the partial design 330 to determine any number of associated satisfaction values. For each of the candidate placements included in the candidate placement list 342, the desirability evaluation engine 350 can aggregate the associated satisfaction values in any technically feasible fashion to generate an overall satisfaction value or "desirability value" for the candidate placement with respect to the partial design 330.

As shown, in some embodiments, the desirability evaluation engine 350 includes, without limitation, a desirability arithmetic expression 360. The desirability arithmetic expression 360 is an arithmetic expression having fuzzy semantics that quantifies the desirability of a placement within the partial design 330 for a spatial object having the spatial object type of the subject object 340. The desirability evaluation engine 350 can generate the desirability arithmetic expression 360 in any technically feasible fashion based on the spatial object type of the subject object 340, the partial design 330, the logic formula set 178, and the fuzzy logic definitions 160.

In some embodiments, the desirability evaluation engine 350 selects each of one or more logic formulas in the logic formula set 178 for which the subject has a spatial object type that matches the spatial object type of the subject object 340. The desirability evaluation engine 350 then converts each of the selected logic formulas to a corresponding arithmetic expression based on the fuzzy logic definitions 160 and consolidates the arithmetic expressions to generate the desirability arithmetic expression 360.

In some embodiments, the desirability evaluation engine 350 accounts for a current set of placements of spatial objects specified in the partial design 330 when converting the selected logic formulas to corresponding arithmetic expressions. Accordingly, each arithmetic expression generated by the desirability evaluation engine 350 can be evaluated for a candidate placement of the subject object 340 to compute a satisfaction value that correlates to a degree of satisfaction of the corresponding design intent statement. In the same or other embodiments, the desirability evaluation engine 350 normalizes each of the arithmetic expressions and the desirability arithmetic expression 360 such that each satisfaction value and each desirability value is a real number within the unit interval. In the same or other embodiments, a desirability value of 0 indicates a minimum degree of desirability, a desirability value of 1 indicates a maximum degree of desirability, and other desirability values indicate intermediate degrees of desirability,

The desirability evaluation engine 350 can convert each selected logic formula to a corresponding arithmetic expression and consolidate the arithmetic expressions to generate the desirability arithmetic expression 360 in any technically feasible fashion. For instance, in some embodiments, the desirability evaluation engine 350 can implement any number of fuzzy logic rule evaluation algorithms, fuzzy logic aggregation algorithms, first-order logic evaluation algorithms, logic inference algorithms, any other types of logic algorithms, or any combination thereof to generate the arithmetic expressions and the desirability arithmetic expression 360.

In the same or other embodiments, the desirability evaluation engine 350 represents each of the selected logic formulas as a corresponding arithmetic expression and then consolidate the arithmetic expressions into the desirability arithmetic expression 360 based on the partial design 330 and value definitions for the associated fuzzy geometric predicates and fuzzy operations. In some embodiments, value definitions for the fuzzy geometric predicates and fuzzy operators are specified in the fuzzy geometric predicate set 230 and the fuzzy operator set 240, respectively.

In some embodiments, the desirability evaluation engine 350 evaluates the desirability arithmetic expression 360 for each of the candidate placements in the candidate placement list 342 to compute corresponding desirability values. In the same or other embodiments, the desirability evaluation engine 350 aggregates the desirability values in any technically feasible fashion that associates each desirability value with the corresponding candidate placement. As shown, in some embodiments, the desirability evaluation engine 350 aggregates the desirability values to generate the desirability value list 380, where the position of each desirability value in the desirability value list 380 matches the position of the corresponding candidate placement in the candidate placement list 342.

In some other embodiments, the desirability evaluation engine 350 generates a heat map (not shown) of desirability values that includes, without limitation, a different desirability depiction (e.g., circle) for each of the candidate placements in the candidate placement list 342. The position of each desirability depiction within the heat map in two dimensions corresponds to the position associated with the corresponding candidate placement. Optionally, the position of each desirability depiction within the heat map in a third dimension corresponds to the orientation associated with the corresponding candidate placement. The color and/or size of each desirability depiction reflects the corresponding desirability value.

Advantageously, as persons skilled in the art will recognize, the desirability evaluation engine 350 enables the design generator 190 to account for the design intent statement set 188 when sequentially determining placements within the initial design 182 for the spatial objects included in the unplaced spatial object set 184. And, as described previously herein in conjunction with Figure 1, the intent-driven layout application 130 can execute the design generator 190 multiple times to generate different output designs that satisfy the constraint set 186, where each output design corresponds to a different placement sequence. Accordingly, the intent-driven layout application 130 can efficiently and automatically explores the design space of acceptable solutions for the design problem described via the problem specification 180.

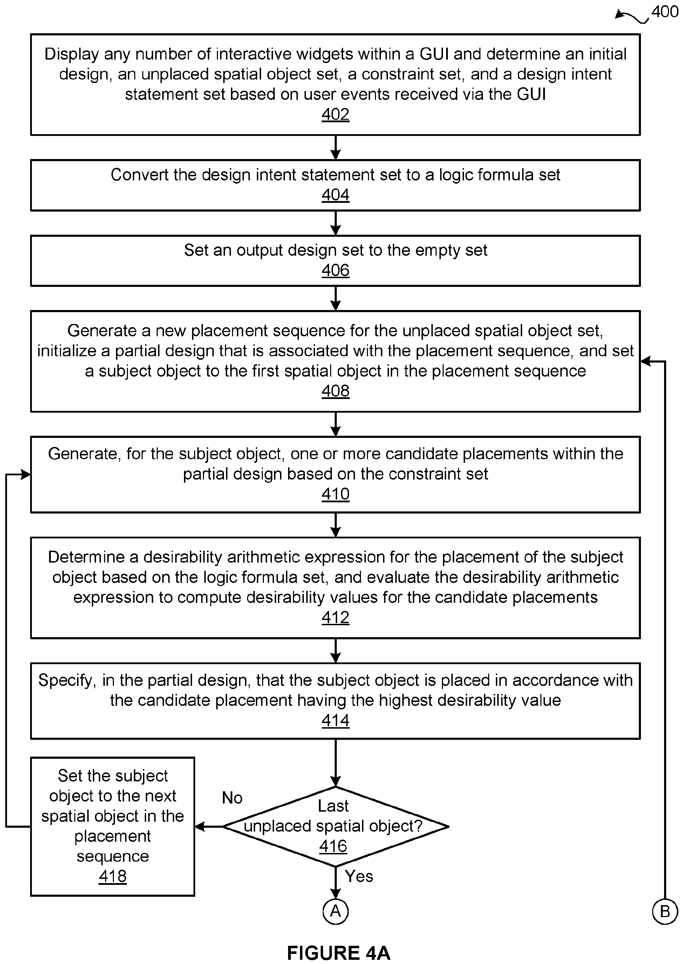

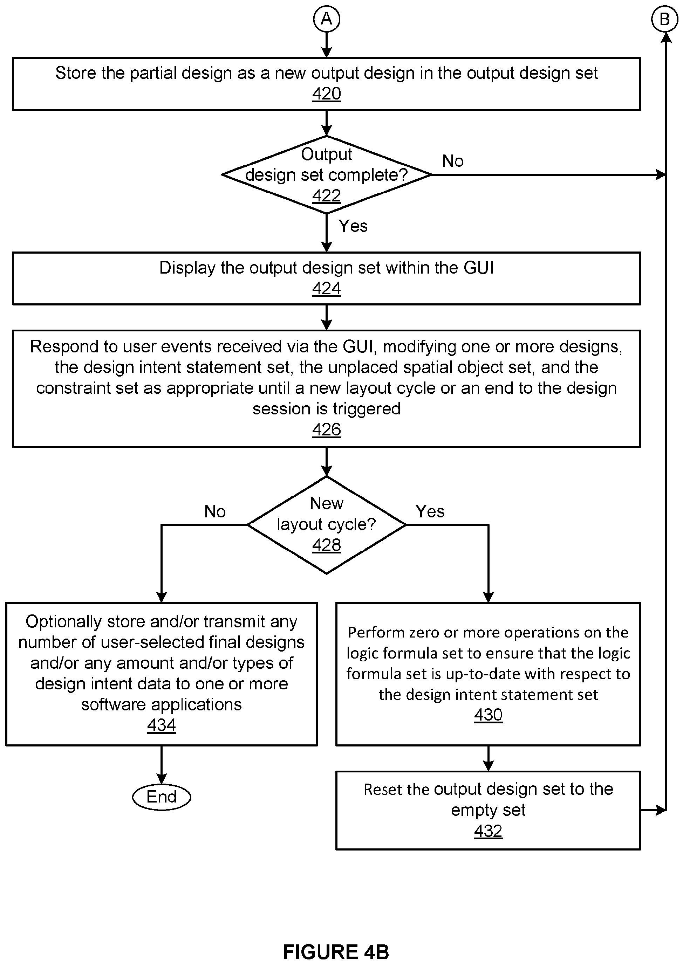

Figures 4A-4B set forth a flow diagram of method steps for automatically generating two-dimensional designs for floor spaces, according to various embodiments. Although the method steps are described with reference to the systems of Figures 1-3, persons skilled in the art will understand that any system configured to implement the method steps, in any order, falls within the scope of the present invention.

As shown, a method 400 begins at step 402, where the GUI engine 140 displays any number of interactive widgets within the GUI 150 and determines at least an initial design 182, an unplaced spatial object set 184, a constraint set 186, and a design intent statement set 188 based on user events received via the GUI 150. At step 404, the fuzzy intent engine 170 converts the design intent statement set 188 to the logic formula set 178. At step 406, the intent-driven layout application 130 sets the output design set 192 to the empty set.

At step 408, the design generator 190 generates a new version of the placement sequence 320 for the unplaced spatial object set 184, initializes a new version of the partial design 330 that is associated with the placement sequence 320, and sets the subject object 340 equal to the first spatial object in the placement sequence 320. At step 410, the design generator 190 generates, for the subject object 340, one or more candidate placements within the partial design 330 based on the constraint set 186.

At step 412, the design generator 190 determines a desirability arithmetic expression 360 for the placement of the subject object 340 based on the logic formula set 178, and evaluates the desirability arithmetic expression 360 to compute desirability values for the candidate placements. At step 414, the design generator 190 specifies, in the partial design 330, that the subject object 340 is placed in accordance with the candidate placement having the greatest desirability value. At step 416, the design generator 190 determines whether the subject object 340 is the last unplaced spatial object.

If, at step 416, the design generator 190 determines that the subject object 340 is not the last unplaced spatial object, then the method 400 proceeds to step 418. At step 418, the design generator 190 sets the subject object 340 equal to the next spatial object specified in the placement sequence 320. The method 400 then returns to step 410, where the design generator 190 generates, for the subject object 340, one or more candidate placements within the partial design 330 based on the constraint set 186.

If however, at step 416, the design generator determines that the subject object 340 is the last unplaced spatial object, then the method 400 proceeds directly to step 420. At step 420, the intent-driven layout application 130 stores the partial design 190 as a new output design in the output design set 192. At step 422, the intent-driven layout application 130 determines whether the output design set 192 is complete. If, at step 422, the intent-driven layout application 130 determines that the output design set 192 is not complete, then the method 400 returns to step 408, where the design generator 190 generates a new version of the placement sequence 320, initializes a new version of the partial design 330, and sets the subject object 340 equal to the first spatial object in the placement sequence 320.

If, however, at step 422, the intent-driven layout application 130 determines that the output design set 192 is complete, then the method 400 proceeds directly to step 424. At step 424, the GUI engine 140 displays the output design set 192 within the GUI 150. At step 426, the GUI engine 140 responds to user events received via the GUI 150, modifying one or more designs, the design intent statement set 188, the unplaced spatial object set 184, and the constraint set 186 as appropriate until a new layout cycle or an end to the design session is triggered.

At step 428, the GUI engine 140 determines whether to initiate a new layout cycle. If, at step 428, the GUI engine 140 determines to initiate a new layout cycle, then the method 400 proceeds to step 430. At step 430, the fuzzy intent engine 170 perform zero or more operations on the logic formula set 178 to ensure that the logic formula set 178 is up-to-date with respect to the design intent statement set 188. At step 432, the intent-driven layout application 130 resets the output design set 192 to the empty set. The method 400 then returns to step 408, where the design generator 190 generates a new version of the placement sequence 320, initializes a new version of the partial design 330, and sets the subject object 340 equal to the first spatial object in the placement sequence 320.

If, however, at step 428, the GUI engine 140 determines not to initiate a new layout cycle, then the method 400 proceeds directly to the step 434. At step 434, the intent-driven layout application 130 optionally stores and/or transmits any number of user-selected final designs and/or any amount and/or types of design intent data 196 to one or more software applications

In sum, the disclosed techniques enable efficient generation of designs for floor spaces based, at least in part, on design intents. In some embodiment, to initiate a design session, an intent-driven layout application generates and displays an intent widget and any number and/or types of other GUI elements within a GUI. The intent widget allows a user to describe design intent statements via customizable design intent patterns, where each design intent statement is a natural language statement about any type of spatial relations between any number and/or types of spatial objects. Based on user events received via the GUI, the GUI engine determines an initial design, an unplaced spatial object set, a constraint set, and a design intent statement set that includes, without limitation, any number of design intent statements.

During an initial layout cycle, the intent-driven layout application converts each design intent statement in the design intent statement set to a logic formula. Each logic formula can be evaluated for a set of spatial object placements within a bounded 2D space to compute a truth value that correlates to a satisfaction degree of the corresponding design intent statement. Subsequently, the intent-driven layout application generates multiple output designs based on the logic formulas, the initial design, the unplaced spatial object set, and the constraint set. To generate each output design, the intent-driven layout application randomly determines a placement sequence for the spatial objects in the unplaced spatial object set. The intent-driven layout application sets a partial design equal to the initial layout and sets a subject object equal to the first spatial object in the placement sequence. The intent-driven layout application generates multiple candidate placements for the subject object based on the partial design and the constraint set, where each candidate placement specifies a different combination of a position and an orientation within the partial design for the subject object.

The intent-driven layout application determines a desirability arithmetic equation based on a relevant subset of the logic formulas and the partial design. For each of the candidate placements, the intent-driven layout application evaluates the arithmetic equation to compute a desirability value for the candidate placement that correlates to an aggregation of the satisfaction degrees of the associated design intent statements. The intent-driven layout application selects the candidate placement having the greatest desirability value and updates the partial design to specify that the subject object has the selected candidate placement within the partial design. After the intent-driven layout application has updated the partial design to specify that the last unplaced spatial object has the corresponding selected candidate placement within the partial design, the design generator stores the partial design as an output design that is associated with the placement sequence.

After the intent-driven layout application generates the output designs for the initial layout cycle, the intent-driven layout application displays representations of the output designs within the GUI. Based on user events received via the GUI, the intent-driven layout application can modify any number of the output designs, the initial design, the unplaced spatial object set, the design intent statements, or any combination thereof. In direct or indirect response to any number of user events received via the GUI, the intent-driven layout application can automatically initiate a new layout cycle, determine one or more final designs, store one or more final designs in any available memory, transmit one or more final designs to any number of software applications, terminate the design session, or any combination thereof.

At least one technical advantage of the disclosed techniques relative to the prior art is that, with the disclosed techniques, designs for floor spaces can be automatically generated based on design intents. In that regard, with the disclosed techniques, statements of design intents are automatically converted to logic formulas, and desirability values for different placements within a given design for spatial objects are computed based the logic formulas. The resulting desirability values can then be compared to determine the best placement within the design for a given spatial object. Accordingly, the amount of time and effort required to generate designs that are convergent with design intents can be substantially reduced relative to prior art approaches. Further, with the disclosed techniques the overall design space can be explored more thoroughly relative to what can be achieved with conventional CAD applications, which can result in more optimized final designs relative to conventional approaches. These technical advantages provide one or more technological improvements over the prior art.

1. In some embodiments, a computer-implemented method for automatically generating designs for floor spaces comprises generating a first logic formula based on a first statement of a first design intent and at least one fuzzy geometric predicate; computing, for a first spatial object, a first plurality of desirability values for a first plurality of candidate placements within a first design based on the first logic formula; selecting a first candidate placement from the first plurality of candidate placements based on the first plurality of desirability values; and generating a second design based on the first design, wherein the first spatial object has the first candidate placement within the second design.

2. The computer-implemented method of clause 1, wherein computing the first plurality of desirability values comprises generating an arithmetic expression based on the first logic formula and the first design; and evaluating the arithmetic expression for the first candidate placement to compute a first desirability value included in the first plurality of desirability values.

3. The computer-implemented method of clauses 1 or 2, wherein selecting the first candidate placement comprises performing one or more comparison operations on the first plurality of desirability values to determine a greatest desirability value included in the first plurality of desirability values; and determining that the greatest desirability value corresponds to the first candidate placement.

4. The computer-implemented method of any of clauses 1-3, wherein the first candidate placement specifies at least one of a position or an orientation within the first design for the first spatial object.

5. The computer-implemented method of any of clauses 1-4, further comprising displaying an interactive graphical user interface (GUI) element within a GUI; receiving, via the GUI, a first user event corresponding to a first interaction between a user and the interactive GUI element; and generating the first statement of the first design intent based on the first user event.

6. The computer-implemented method of any of clauses 1-5, further comprising receiving, via the GUI, a second user event corresponding to a second interaction between the user and the interactive GUI element; modifying the first statement of the first design intent based on the second user event to generate a second statement of a second design intent; and generating a third design based on the first design, wherein the third design reflects the second statement of the second design intent.

7. The computer-implemented method of any of clauses 1-6, further comprising generating the first plurality of candidate placements based on the first design and one or more design constraints.

8. The computer-implemented method of any of clauses 1-7, further comprising generating a third design based on the first design and a placement sequence for a plurality of unplaced spatial objects, wherein the placement sequence for the plurality of unplaced spatial objects differs from another placement sequence for the plurality of unplaced spatial objects that is associated with the second design.

9. The computer-implemented method of any of clauses 1-8, further comprising storing design intent data in a memory, wherein the design intent data comprises at least one of the first statement of the first design intent or the first logic formula.

10. The computer-implemented method of any of clauses 1-9, further comprising computing, for a second spatial object, a second plurality of desirability values for a second plurality of candidate placements within the second design based on the first logic formula; selecting a second candidate placement from the second plurality of candidate placements based on the second plurality of desirability values; and generating a third design based on the second design, wherein the second spatial object has the second candidate placement within the third design.

11. In some embodiments, one or more non-transitory computer readable media include instructions that, when executed by one or more processors, cause the one or more processors to automatically generate designs for floor spaces by performing the steps of generating a first logic formula based on a first statement of a first design intent and at least one fuzzy geometric predicate; computing, for a first spatial object, a first plurality of desirability values for a first plurality of candidate placements within a first design based on the first logic formula; selecting a first candidate placement from the first plurality of candidate placements based on the first plurality of desirability values; and generating a second design based on the first design, wherein the first spatial object has the first candidate placement within the second design.

12. The one or more non-transitory computer readable media of clause 11, wherein computing the first plurality of desirability values comprises generating an arithmetic expression based on the first logic formula and the first design; and evaluating the arithmetic expression for the first candidate placement to compute a first desirability value included in the first plurality of desirability values.

13. The one or more non-transitory computer readable media of clauses 11 or 12, wherein the first statement of the first design intent comprises a natural language statement about one or more spatial relations between spatial objects having one or more types.

14. The one or more non-transitory computer readable media of any of clauses 11-13, wherein the first candidate placement specifies at least one of a position or an orientation within the first design for the first spatial object.

15. The one or more non-transitory computer readable media of any of clauses 11-14, further comprising displaying an interactive graphical user interface (GUI) element within a GUI; receiving, via the GUI, a first user event corresponding to a first interaction between a user and the interactive GUI element; and generating the first statement of the first design intent based on the first user event.

16. The one or more non-transitory computer readable media of any of clauses 11-15, further comprising generating the first plurality of candidate placements based on the first design and at least one of a requirement that spatial objects cannot overlap, a required clearance, or an alignment requirement.

17. The one or more non-transitory computer readable media of any of clauses 11-16, wherein the at least one fuzzy geometric predicate comprises a function that maps a set of placements of spatial objects to a truth value that correlates to an associated degree of satisfaction.

18. The one or more non-transitory computer readable media of any of clauses 11-17, further comprising generating a third design based on the first design and a placement sequence for a plurality of unplaced spatial objects, wherein the placement sequence for the plurality of unplaced spatial objects differs from another placement sequence for the plurality of unplaced spatial objects that is associated with the second design.

19. The one or more non-transitory computer readable media of any of clauses 11-18, further comprising transmitting design intent data to at least one software application, wherein the design intent data comprises at least one of the first statement of the first design intent or the first logic formula.

20. In some embodiments, a system comprises one or more memories storing instructions and one or more processors coupled to the one or more memories that, when executing the instructions, perform the steps of generating a first logic formula based on a first statement of a first design intent and at least one fuzzy geometric predicate; computing, for a first spatial object, a first plurality of desirability values for a first plurality of candidate placements within a first design based on the first logic formula; selecting a first candidate placement from the first plurality of candidate placements based on the first plurality of desirability values; and generating a second design based on the first design, wherein the first spatial object has the first candidate placement within the second design.

Any and all combinations of any of the claim elements recited in any of the claims and/or any elements described in this application, in any fashion, fall within the contemplated scope of the embodiments and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments. Aspects of the present embodiments can be embodied as a system, method, or computer program product. Accordingly, aspects of the present disclosure can take the form of an entirely hardware embodiment, an entirely software embodiment (including firmware, resident software, and micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable media having computer readable program codec embodied thereon.

Any combination of one or more computer readable media can be utilized. Each computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory, a read-only memory, an erasable programmable read-only memory, a Flash memory, an optical fiber, a portable compact disc read-only memory, an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession can, in fact, be lock diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow.

**Claims**

1. A computer-implemented method for automatically generating designs for floor spaces, the method comprising:

generating a first logic formula based on a first statement of a first design intent and at least one fuzzy geometric predicate;
computing, for a first spatial object, a first plurality of desirability values for a first plurality of candidate placements within a first design based on the first logic formula;
selecting a first candidate placement from the first plurality of candidate placements based on the first plurality of desirability values; and generating a second design based on the first design, wherein the first spatial object has the first candidate placement within the second design.

2. The computer-implemented method of claim 1, wherein computing the first plurality of desirability values comprises:

generating an arithmetic expression based on the first logic formula and the first design; and
evaluating the arithmetic expression for the first candidate placement to compute a first desirability value included in the first plurality of desirability values.

3. The computer-implemented method of claim 1 or 2, wherein selecting the first candidate placement comprises:

performing one or more comparison operations on the first plurality of desirability values to determine a greatest desirability value included in the first plurality of desirability values; and
determining that the greatest desirability value corresponds to the first candidate placement.

4. The computer-implemented method of any preceding claim, wherein the first candidate placement specifies at least one of a position or an orientation within the first design for the first spatial object.

5. The computer-implemented method of any preceding claim, further comprising:

displaying an interactive graphical user interface (GUI) element within a GUI;
receiving, via the GUI, a first user event corresponding to a first interaction between a user and the interactive GUI element; and
generating the first statement of the first design intent based on the first user event.

6. The computer-implemented method of claim 5, further comprising:

receiving, via the GUI, a second user event corresponding to a second interaction between the user and the interactive GUI element;
modifying the first statement of the first design intent based on the second user event to generate a second statement of a second design intent; and
generating a third design based on the first design, wherein the third design reflects the second statement of the second design intent.

7. The computer-implemented method of any preceding claim, further comprising generating the first plurality of candidate placements based on the first design and one or more design constraints.

**8.** The computer-implemented method of any preceding claim, further comprising generating a third design based on the first design and a placement sequence for a plurality of unplaced spatial objects, wherein the placement sequence for the plurality of unplaced spatial objects differs from another placement sequence for the plurality of unplaced spatial objects that is associated with the second design.

**9.** The computer-implemented method of any preceding claim, further comprising storing design intent data in a memory, wherein the design intent data comprises at least one of the first statement of the first design intent or the first logic formula.

**10.** The computer-implemented method of any preceding claim, further comprising:

computing, for a second spatial object, a second plurality of desirability values for a second plurality of candidate placements within the second design based on the first logic formula;
selecting a second candidate placement from the second plurality of candidate placements based on the second plurality of desirability values; and
generating a third design based on the second design, wherein the second spatial object has the second candidate placement within the third design.

**11.** A computer program product comprising instructions that, when executed by one or more processors, cause the one or more processors to carry out the method of any preceding claim.

**12.** A system comprising:

one or more memories storing instructions; and
one or more processors coupled to the one or more memories that, when executing the instructions, perform the steps of the method of any of claims 1 to 10

Display Screen 120

100

**GUI 150**

**Design Intent Pane 154**

Intent Widget 156

| lunch space ⌄ | should be placed ⌄ | |
|---|---|---|
| NOT close to ⌄ | office ⌄ | AND OR |
| NOT close to ⌄ | desk space ⌄ | AND OR |

Layout
Pane
152

Solution Pane 158

**GUI Engine 140**

| Design Intent Statement Set 188 | **Problem Specification 180** | | |
|---|---|---|---|
| | Initial Design 182 | Unplaced Spatial Object Set 184 | Constraint Set 186 |

188

Fuzzy Logic Definitions 160

180

Output Design Set 192

Fuzzy Intent Engine 170 → Logic Formula Set 178 → Design Generator 190

Intent-Driven Layout Application 130

Memory 116

Processor 112

Compute Instance 110

Input/ Output Devices 122

Final Design Set 198

Design Intent Data 196

**FIGURE 1**

EP 4 239 512 A1

**Fuzzy Logic Definitions 160**

**Fuzzy Geometric Predicate Set 230**

{ $CloseTo(x, y) = 1 - distance(x, y) / maxDistance;$
⋮
}

**Fuzzy Operator Set 240**

{ $\otimes_l(x, y) = max(x + y - 1, 0);$
$\oplus_l(x, y) = min(x + y, 1)$
⋮
}

**Design Intent Statement 220**
"lunch space should be close to office and close to desk space"

**Fuzzy Intent Engine 170**

**Logic Formula 250**
$\forall x\ HasType_{LunchSpace}(x) \rightarrow_l$
$\exists y\ (\ HasType_{Office}(y) \otimes_l CloseTo(x, y)\ ) \otimes_l$
$\exists z\ (\ HasType_{DeskSpace}(z) \otimes_l CloseTo(x, z)\ )$

**FIGURE 2**

**FIGURE 3**

400

Display any number of interactive widgets within a GUI and determine an initial design, an unplaced spatial object set, a constraint set, and a design intent statement set based on user events received via the GUI
402

Convert the design intent statement set to a logic formula set
404

Set an output design set to the empty set
406

Generate a new placement sequence for the unplaced spatial object set, initialize a partial design that is associated with the placement sequence, and set a subject object to the first spatial object in the placement sequence
408

Generate, for the subject object, one or more candidate placements within the partial design based on the constraint set
410

Determine a desirability arithmetic expression for the placement of the subject object based on the logic formula set, and evaluate the desirability arithmetic expression to compute desirability values for the candidate placements
412

Specify, in the partial design, that the subject object is placed in accordance with the candidate placement having the highest desirability value
414

Set the subject object to the next spatial object in the placement sequence
418

No

Last unplaced spatial object?
416

Yes

(A)

(B)

FIGURE 4A

(A)                                                                 (B)

Store the partial design as a new output design in the output design set
420

Output design set complete?
422
— No →

Yes ↓

Display the output design set within the GUI
424

Respond to user events received via the GUI, modifying one or more designs, the design intent statement set, the unplaced spatial object set, and the constraint set as appropriate until a new layout cycle or an end to the design session is triggered
426

New layout cycle?
428
No ←          → Yes

Optionally store and/or transmit any number of user-selected final designs and/or any amount and/or types of design intent data to one or more software applications
434

Perform zero or more operations on the logic formula set to ensure that the logic formula set is up-to-date with respect to the design intent statement set
430

End

Reset the output design set to the empty set
432

**FIGURE 4B**

Europäisches
Patentamt

European
Patent Office

Office européen
des brevets

# EUROPEAN SEARCH REPORT

**Application Number**

EP 23 16 0044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wen Junhan ET AL: "OPTIMIZATION OF A USER-INVOLVED FLOOR LAYOUT RECOMMENDATION SYSTEM AT THE OPERATION STAGE", , 20 August 2020 (2020-08-20), pages 385-400, XP093051539, DOI: http://dx.doi.org/10.46421/2706-6568.37.2020.paper028 Retrieved from the Internet: URL:https://www.researchgate.net/profile/S ylvain-Kubicki/publication/343723224_Optim ization_of_a_User-Involved_Interior_Layout _Recommendation_System_at_the_Operation_St age/links/5f7db279a6fdccfd7b4ce093/Optimiz ation-of-a-User-Involved-Interior-Layout-R ecommendation-System-at-the-Operation-Stag e.pdf [retrieved on 2023-06-02] * abstract * * figures 2, 3, 6 * * Section 2.2, 4.1, 4.2, 6.1 * * the whole document *<br>----- | 1-12 | INV. G06F30/12 G06F30/13 G06F30/17<br><br>ADD. G06F111/04 |
| X | JI-HYUN LEE ET AL: "Integrated Physically Based Manipulation and Decision-Making Tree for Navigation to Support Design Rationale", 22 July 2007 (2007-07-22), 16TH EUROPEAN CONFERENCE – COMPUTER VISION – ECCV 2020, CORNELL UNIVERSITY LIBRARY, 201 OLIN LIBRARY CORNELL UNIVERSITY ITHACA, NY 14853, PAGE(S) 480 – 489, XP019064231, * abstract * * Section 2, 3.1, 4.1, 4.2; figures 3-7; table 1 * * the whole document *<br>-----<br>-/-- | 1-12 | |

| | | |
|---|---|---|
| | | TECHNICAL FIELDS SEARCHED (IPC) |
| | | G06F |

The present search report has been drawn up for all claims

| Place of search | Date of completion of the search | Examiner |
|---|---|---|
| Munich | 12 June 2023 | Brandiska, Pavlina |

EPO FORM 1503 03.82 (P04C01)

page 1 of 2

Europäisches
Patentamt

European
Patent Office

Office européen
des brevets

# EUROPEAN SEARCH REPORT

**Application Number**

**EP 23 16 0044**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOUTAMANIS ALEXANDER: "Fuzzy Modelling for Early Architectural Design", INTERNATIONAL JOURNAL OF ARCHITECTURAL COMPUTING, vol. 5, no. 4, 1 December 2007 (2007-12-01), pages 589-610, XP093052511, ISSN: 1478-0771, DOI: 10.1260/147807707783600816 Retrieved from the Internet: URL:http://journals.sagepub.com/doi/pdf/10.1260/147807707783600816> * abstract * * sections 2, 3, 5; figures 13-17 * * the whole document *   ----- | 1-12 | |
| A | DRIRA ET AL: "Facility layout problems: A survey", ANNUAL REVIEWS IN CONTROL, PERGAMON, AMSTERDAM, NL, vol. 31, no. 2, 5 November 2007 (2007-11-05), pages 255-267, XP022364929, ISSN: 1367-5788 * abstract * * section 5.3; figures 1, 4, 8, 9 * * the whole document *   ----- | 1-12 | TECHNICAL FIELDS SEARCHED (IPC) |

The present search report has been drawn up for all claims

| Place of search | Date of completion of the search | Examiner |
|---|---|---|
| Munich | 12 June 2023 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**